# EUROPEAN PATENT APPLICATION

(11) **EP 0 560 125 A1**
(43) Date of publication of application: **15.09.1993**
(21) Application number: 93102904.5
(22) Date of filing: 25.02.1993
(51) Int. Cl.: H04N 9/31

(54) **Projector**

(30) Priority: 07.03.1992 DE 9203027 U
(71) Applicant: EASTMAN KODAK COMPANY, Rochester, New York 14650-2201 (US); KODAK AKTIENGESELLSCHAFT, D-70323 Stuttgart (DE)
(72) Inventor: Reibl, Bernd, W-7032 Sindelfingen (DE)
(74) Representative: Lewandowsky, Klaus, Dipl.-Ing.

(57) **Abstract**

The subject of the invention is a projector with a light source and an optical means which includes a lens and defines a raypath extending from said light source to said lens and with a projection gate for an image which is positioned in the raypath and through which light from said light source can be transmitted.

The projection gate (61, 62, 63) is provided for an additional second image which along with the first image can be projected through the lens (3), whereby one LC display (61, 62, 63) each is provided for producing the first image and the second image.

Preferably, the projector is designed as a color video projector and comprises a mirror system (75) forming part of its optical means and serving to separate the colors of the light from light source (69) and in that a plurality of LC displays (61, 62, 63) is provided which are optically associated with the mirror system (75) to produce separation images including color information of the first and the second image.

The projector includes a programmable electronic data processing unit (65) for generating electric control signals for the LC displays (61, 62, 63) and in that the data processing unit (65) consists of several parts for selectively and separately processing image information from the first and the second image.

## Description

The invention relates to a projector with a light source and an optical means which includes a lens and defines a raypath extending from said light source to said lens, and with a projection gate for an image which is positioned in the raypath and through which light from the light source can be transmitted.

It is the object of the invention to provide a projector which is particularly well adapted for purposes such as lectures, training sessions and the like.

According to the invention this object is attained in a projector of the aforementioned type in that the projection gate is provided for an additional second image which along with the first image can be projected through the lens.

During lectures, training sessions or events serving for the entertainment of an audience it is often necessary or advantageous to project different items of visual information side by side onto a screen. Such items may consist of an image or a graph which is to be displayed side by side with an explanatory text or an associated legend, or of two images, diagrams or texts which are to be projected side by side during meetings or other events staged for information or entertainment purposes.

So far separate projectors had to be set up for that purpose which had to be aligned with the screen, adjusted accordingly and actuated. The invention now offers an opportunity of presenting side by side different items of visual information using a single projector. Since the invention allows two images to be jointly projected through the lens of a single projector, the projection distance and the image size have to be set only once in the single projector required. On the one hand, operation is rended easier and much more comfortable thereby. On the other hand the danger is avoided of changes in the mutual alignment of the two images on the screen occurring during operation, which in the case of the commonly used projectors happens if the position of the projector is inadvertently changed. Since in the case of the projector according to the invention the images are jointly projected through one lens the position of the images relative to each other is predetermined by the optical means of the projector.

Particular advantages are attained if the projector according to the invention is designed according to claim 2 as a video projector in which the images are produced by a corresponding control of at least one LC display positioned in the raypath.

The electric control signals for the LC displays can be produced digitally in a manner wellknown in connection with video projectors. If the projector according to the invention tees the form of a video projector which allows two adjacently positioned images to be jointly projected, a digital projection system is obtained by means of which items of visual information of different types and formats can be jointly displayed, i.e. an apparatus for multimedia applications. While such multimedia applications used to necessitate several slide projectors, episcopes and TV screens with associated video recorders which had to be placed at various points of the audience during lectures and similar events and could not be jointly operated or only operated at great difficulties, the invention allows multimedia presentations to be performed in a very simple manner using one single apparatus - Images, texts, graphics or video sequences can be displayed successively or parallely. Other modern media such as computers can be connected.

In the case of embodiments in which the projector according to claim 8 has a built-in disk drive an independently operating projection system is available which can be operated without the input of externally generated data. The user is able for example to project images stored on a Photo CD or video sequences stored on optical disks .

Particularly advantageously two built-in disk drives are used or the disk drive or drives is/ are adapted for MO disks. Computer-generated texts and graphics, for example, can be transferred to the optical disk. If two drives are vailable in the projector, images can be transferred from one drive to the other and a personalized lecture can thus be prepared.

In order to fix the sequence of the items to be displayed programs can be entered into a user memory or directly written on the optical disk, as known from conventional audio CD players. Thus a lecture can be pre-programmed both in the projector and independently thereof.

Preferably the ratio of width to height of the image-forming surface of the LC display is adapted to the ratio of width to height of that of the image formats to be projected whose width compared to the height is greatest. Among the formats currently available such as video image and text, DIN format text pages, film image formats and the like, the HDTV format (high-density television) is the one whose width relative to its height is greatest. If the LC displays are adapted to that format two HDTV images can be formed on the LC displays so as to completely fill their display areas and displayed side by side on the screen. When changing to different formats with a smaller ratio of width to height they can be displayed with the same image heights as the HDTV images while their widths do not completely fill the screen, subject to the data processing unit of the projector having been programmed such that it generates control signals for the LC displays with correspondingly changed reproduction scales . This means that there are no differences in height if the formats are changed or images of different formats are simultaneously projected side by side.

The light source of the projector preferably includes more than one lamp, for example two lamps each of which serves to transmit light through the LC displays for the first and for the second image. The lamps can be arranged, together with spare lamps, on a lamp turret which in the case of lamp failure allows the lamps to be readily and easily replaced without any major interruption of the operation.

The projector can be provided with an overhead projection means with a mirror arrangement which can be optically connected with the lens . The mirror arrangement can include a mirror support arm which is pivotally mounted on the projector housing adjacent to the lens and at whose end section adjacent to the lens a first deflecting mirror is hinged such that it is movable into and out of the raypath of the lens in response to the angular position of the mirror support arm. The pivotal deflecting mirror can also serve as a pivotable lens cover which can be pivoted onto the front side of the lens when the projector is not in use .

According to further advantageous embodiments a cradle can be provided on the projector in which a remote control can be releasably secured whose keys allow the data processing unit of the projector to be programmed and/ or controlled so that the projector need not have an operating keyboard of its own in such cases.

In order that a projection program can be monitored or a program prepared without the images having to be projected on the screen, an external LC display can be provided on the projector to serve as a control monitor. The control monitor is preferably removable from the projector and provided with coupling means for the data transfer between the remote control and/ or the data processing unit of the projector.

The control monitor can be designed as a panel which is removably accommodated in the lower section of the projector and to which the remote control of the projector can be attached . The data transfer between projector and panel can be effected by radio frequency transmission or via a flexible data line. The current sources integrated into the panel can be charged via a cable or contacts when the panel is shifted into the apparatus. The panel serves not only to indicate the images just projected, previously projected or to be projected or for projection-independent preprogramming but it can also be used as an editing board. As is wellknown in the computer art, when the display image is switched off the panel can form such a board which can be written on by means of an electronic stylus received in the panel. Information thus input will then be projected by the projector or stored by means of the disk drive. Moreover, the electronic stylus can be used to select image points which are displayed in the form of marks such as small arrows or the like.

In the following the invention will be explained in further detail with reference to an embodiment schematically illustrated in the drawing wherein:
- Fig. 1: is a perspective view, seen obliquely from the front, of an embodiment of the projector together with its remote control;
- Fig. 2: is a perspective view of the projector, similar to that in Fig. 1 but seen obliquely from the rear, with a control monitor detached from the projector and an overhead projection means in its operative position,
- Fig. 3: is a front view of the projector, with parts broken away, with the overhead projection means schematically illustrated on the right and on the left side in its rest position and its operative position respectively,
- Fig. 4: is a plan view of the projector, with parts broken away and seen from the rear,
- Fig. 5: is a lateral view, with parts broken away, of the connecting area of the overhead projection means of the projector,
- Fig. 6: is a lateral view of the projector,
- Figs. 7 to 8: are a lateral view and a plan view respectively of the control monitor when detached from the projector,
- Fig. 9: is a plan view of the projector with its housing cover removed,
- Fig. 10: shows a longitudinal section through the center of the projector, and
- Figs. 11 to 12: are diagrammatic views showing examples of side-by-side arrangements of different image formats to be projected.

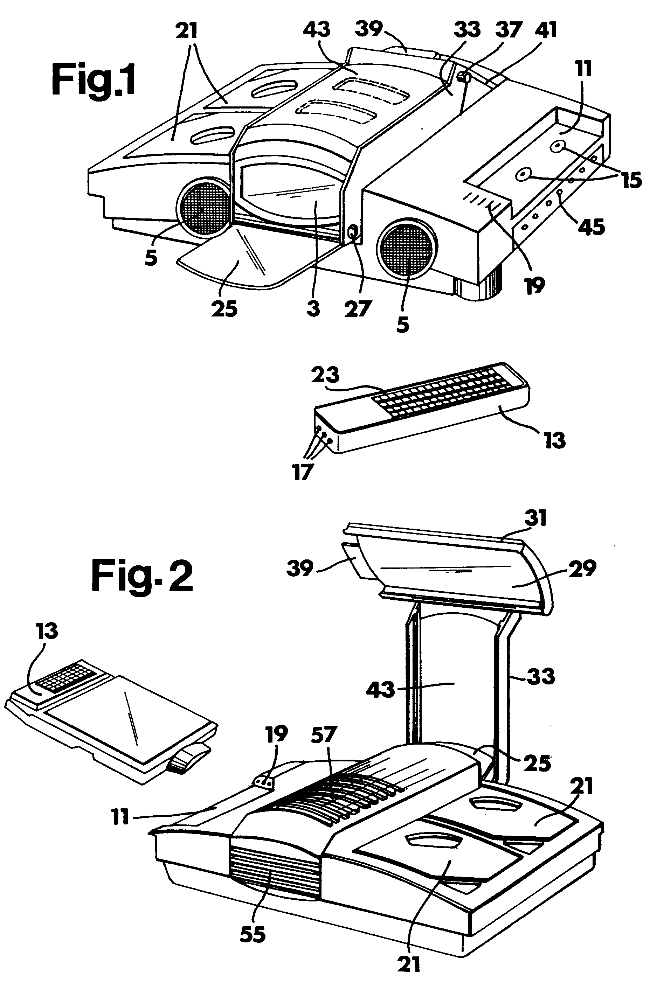

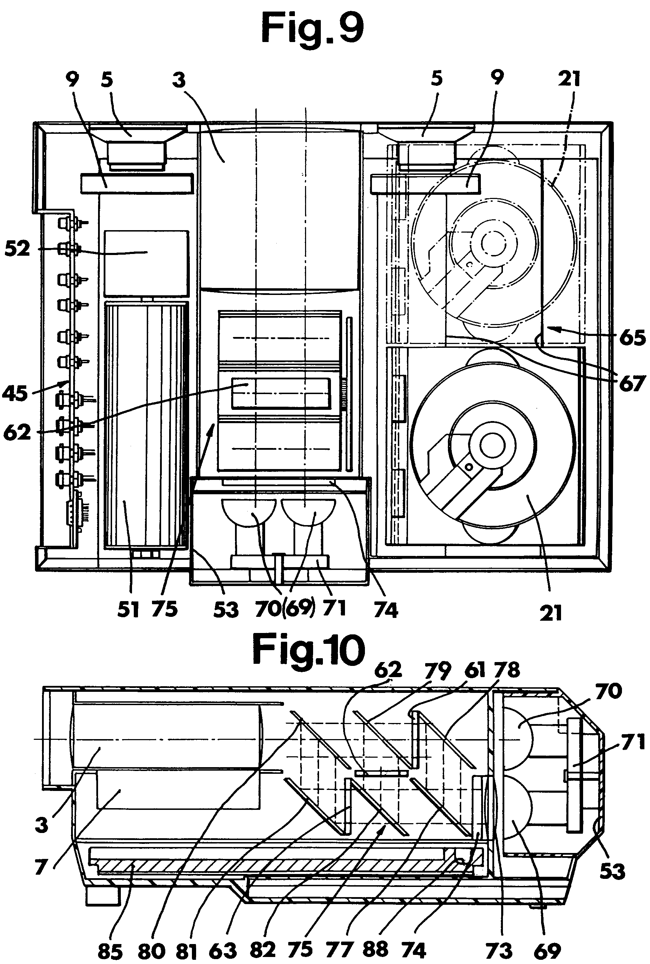

Fig. 1 illustrates the projector as seen from the front with a lens 3 arranged in its center and one loudspeaker 5 each positioned on either side of lens 3. The lens is a zoom lens which can be controlled via a setting drive 7 (Fig. 10) by a motor. The lens ist not circular but eye-shaped so as to be adapted to the requirements of "wide screen projection" by which two images are projected side by side onto a screen. More precisely, the lens 3 is a section of a circular lens from which a circumferential portion with an oval boundary line has been cut at the upper and lower side. At its sides, the lens 3 has plane vertical boundaries, see Fig. 1. The loudspeakers 5 are wide-range loudspeakers provided with the necessary electronic means 9, see Fig. 9.

On the upper side of its housing the projector has a cradle 11 extending along one of its lateral edges and adapted to receive a remote control 13. In order to releasably secure said remote control in cradle 11, button-type holding magnets 15 arranged at the bottom of cradle 11 cooperate with ferromagnetic counterparts at the lower side of remote control 13. Moreover, each of the holding magnets 15 includes on its upper surface a contact piece which serves to charge current sources included in the remote control 13. An infrared emitter and receiver unit 17 at the end side of the remote control 13 ensures the exchange of data with a coupling means 19 in cradle 11 when remote control 13 is placed in cradle 11. When remote control 13 is removed from its cradle 11 data transfer between the control and the projector is effected either by another coupling means not illustrated which is provided on the front side of the projector and cooperates with the emitter and receiver unit 17 of remote control 13 or by radio frequency transmission. The remote control 13 can be used both in the usual manner in a position remote from the projector for the control and actuation thereof or, when placed in cradle 11, its keys 23 can serve as projector controls so that the projector need not be provided with a stationary control panel of its own.

On its side opposite cradle 11, the projector housing includes two disk drives 21 which can be loaded from the top and are provided with laser means for MO disks.

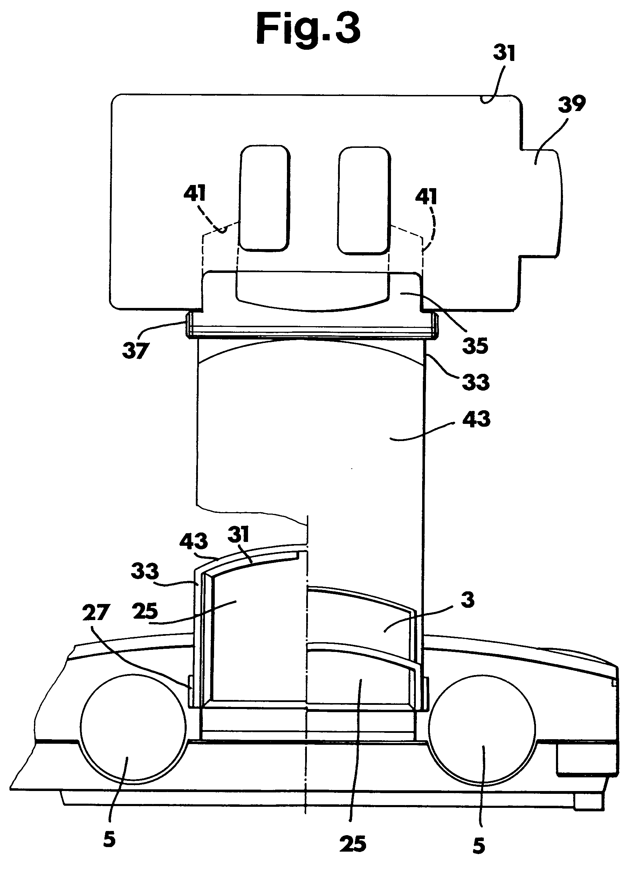

The projector has an overhead projection means shown in Fig. 1 in its inoperative rest position in which projection occurs in the normal direction of the light passing through lens 3, and shown in Fig. 2 in its operative position. Further details of the overhead projection means are illustrated in Figs. 3 to 6. The overhead projection means comprises a first plane deflecting mirror 25 which is arranged for pivotal movement about a journal 27 on the projector housing below lens 3. Fig. 1 shows deflecting mirror 25 in its horizontal position in which it is pivoted away from lens 3 so that the lens 3 is cleared for normal projection.

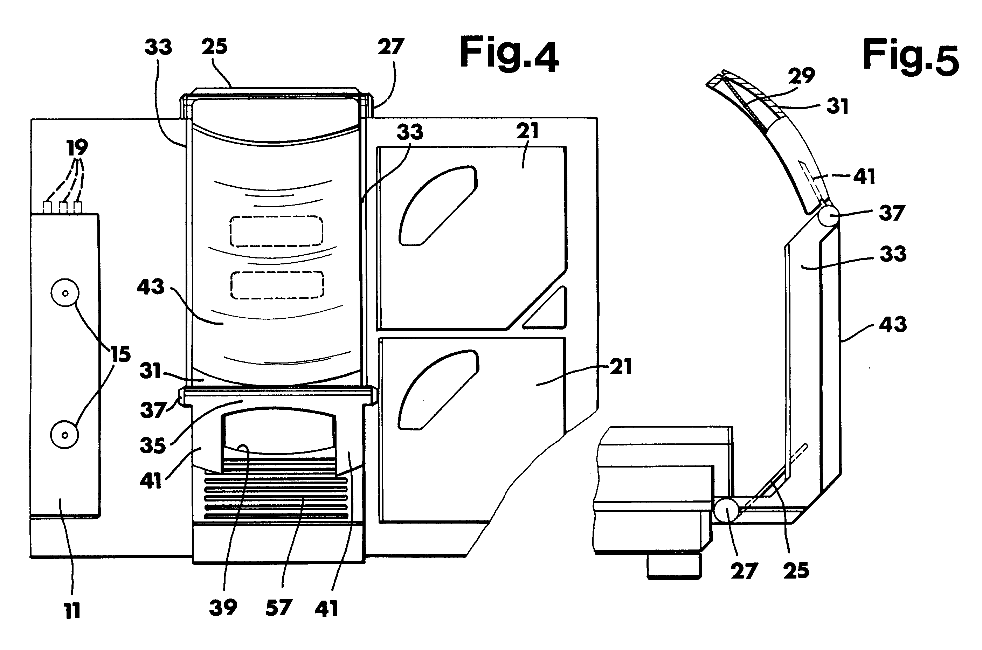

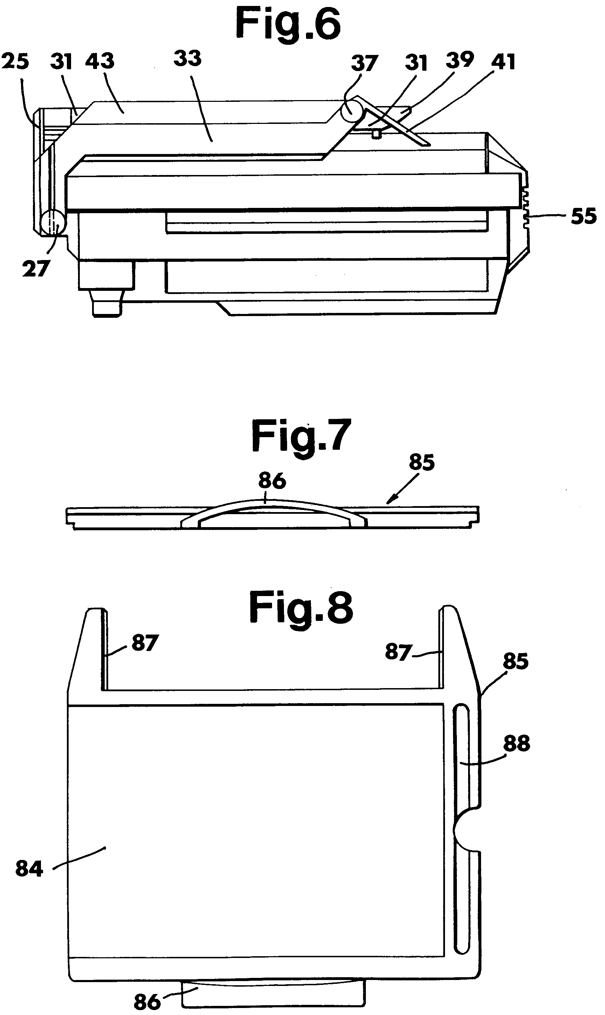

Figs. 4 and 6 as well as the left side of Fig. 3 illustrate deflecting mirror 25 in its position in front of lens 3 in which it forms a protective cover when lens 3 is not in use. Figs. 2 and 5 show the deflecting mirror 25 in a position inclined by 45_ for overhead projection. In this position assumed by the deflecting mirror 25 in the operative position of the overhead projection means as illustrated in Figs. 2 and 5 and on the right side of Fig. 3, it deflects the light beam vertically upwards to a second deflecting mirror 29 which is also plane and mounted in a mirror frame 31 which can be plugged onto the free end of a mirror support arm 33, as can be inferred from Figs. 3 and 5. The opposite end section of mirror support arm 33 is hinged to the projector by means of journal 27. At its end associated with the mirror frame 31 of the upper second deflecting mirror 29, mirror support arm 33 comprises a holder 35 which is pivotably connected to mirror support arm 33 by means of a hinge 37. The holder terminates in two fork-shaped projections 41 which can be inserted into corresponding slots in the mirror frame 31 so that said frame can be plugged onto the free end of the mirror support arm 33. Like journal 27, hinge 37 is also designed such that pivotal movement is carried out in opposition to high frictional forces so that the angular positions in which the first deflecting mirror 25, the mirror support arm 33 and the mirror frame 31 with the upper deflecting mirror 29 have been adjusted are maintained by frictional engagement.

The two lateral spars of mirror support arm 33 are connected by a curved opal glass-type colored plexiglass hood 43. When mirror support arm 33 is pivoted to the position corresponding to the rest position of the overhead projection means, see Figs. 1, 6 and the left side of Fig. 3, hood 43 forms a protective cover which extends above the upper surface of the projector along the optical axis of lens 3, and below which the mirror frame 31 with the upper deflecting mirror 29 can be inserted after it has been detached, see Fig. 6 . When inserted in this manner a grip portion 39 molded to the narrow side of mirror frame 31 (Fig. 3) extends between the fork-shaped projections 41 so that it can be gripped by an operator without difficulty and used to pivot mirror arm 33 to its upper position.

Below cradle 11 of the remote control 13, a connector strip generally denoted 45 extends along the projector housing, said strip having terminals for the power supply and the input of audio, video and digitized data.

The essential parts of the inner structure of the projector are schematically depicted in Figs. 9 and 10. An axial flow fan 51 of large dimensions which is driven by a driving motor 52 and extends along the connector strip 45 sucks in cold air at the rear side of the projector and blows it through a lamp housing 53 and the optical means associated with lens 3 until it exits through slots 55 at the rear side and slots 57 (Fig. 2) at the top.

In order to allow two color images to be projected simultaneously side by side the optical means between lamp housing 53 and lens 3 include three LC displays, namely an LC display 61 which produces color separation images corresponding to the red portion of the images to be projected, an LC display 62 producing color separation images corresponding to the blue portion of the images to be projected, and an LC display 63 producing color separation images corresponding to the green portion of the images to be projected.

In a manner known in the video projector art an electronic data processing unit 65 whose printed circuit boards 67 are arranged below the disk drives 21, generates the electric control signals for the LC displays 61, 62, 63. Since the present projector allows two images to be simultaneously projected side by side, the data processing unit 65 correspondingly consists of several parts, i.e. it has two video channels. The audio portion of the data processing unit 65 also comprises a plurality of signal processing channels, for example channels for stereo sound reproduction by means of the loudspeakers 5.

Owing to the large width of the LC displays 61, 62 and 63 as required for forming two images side by side two metal halide lamps 69 arranged side by side in the lamp housing are simultaneously activated in order to produce a lightbeam sufficiently large to illuminate the wide-screen format. The lamps 69 are arranged in pairs on a rotatably mounted lamp turret 71 located at the rear of the lamp housing 53. Above the two lamps 69 held in the position of use a pair of spare lamps 70 is arranged which can be moved into the operative position by rotation of turret 71. In the case of lamp failure, therefore, the exchange of the lamps does not cause any major interruption of the operation.

The light of the lamps 69 located in the operative position falls through a condenser 73 and a UV-IR blocking filter 74 onto a mirror system 75 which is optically associated with the LC displays 61, 62, 63 and designed in a manner wellknown in connection with color video projectors. Its fully and partially reflective mirrors, denoted 77 to 82 in Fig. 10, have different spectral transparency and reflectance characteristics.

Figs. 2, 7 and 8 show a control monitor in the form of a panel 85 which can be shifted into the projector at the lower side thereof. Panel 85 has a large-area LC display 84 mounted in a frame with a handle 86. The frame has an extension with a receiving means 87 onto which the remote control 13 can be shifted . A coupling means (not illustrated) designed in a manner similar to coupling means 19 positioned in cradle 11 of the projector is provided on the receiving means 87 such that when the remote control 13 is in its position on panel 85 data are exchanged between said control and the control electronics of the LC display 84, which are located in panel 85. When remote control 13 is in its position on the receiving means 87 of panel 85, see Fig. 2, the data transfer between remote control 13 and the projector occurs via radio frequency transmission. Alternatively the data processing unit 65 of the projector could also be connected with the panel via a data line in the form of a flexible cable, in which case current sources accommodated in panel 85 could also be charged via the connecting cable.

In a manner wellknown in the computer art the surface of the LC display 84 of panel 85 can be designed as a sensitive surface which in the switched-off state of the LC display 84 forms an editing board which can be written on by means of an electronic stylus in order to directly input data or to apply marks to the image projected. The frame of the panel includes a recess 88 adapted to accommodate the electronic stylus not illustrated.

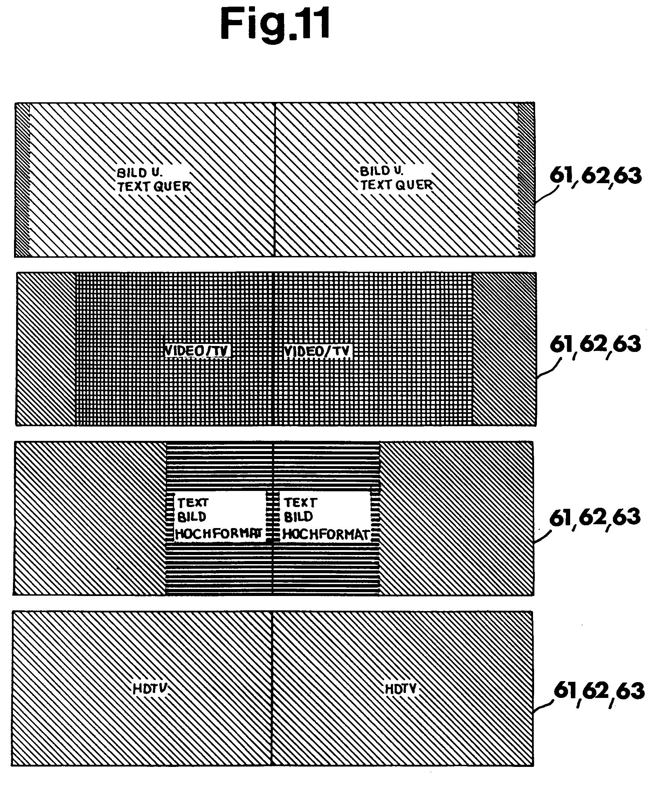

The format of the LC displays 61, 62, 63, i.e. the ratio of width to height, is selected such that it is adapted to that one of the image formats to be projected whose corresponding value is greatest. In other words, both parts of the image-forming surface of each of the LC displays 61, 62, 63 as provided for generating the first image side by side with a second image to be projected are adapted to the "widest" of the formats to be projected. In the present embodiment this is the HDTV format. Fig. 11 shows at the bottom a pair of HDTV images which when projected simultaneously fully cover the surface areas of the LC displays 61, 62, 63. The next illustration from the bottom shows two upright text pages or images which, when simultaneously projected, fill the total height while leaving image-free areas on either side . When changing from the projection of two HDTV images to the projection of two upright text pages or images, therefore, there is no difference in the height of the images while the width is reduced.

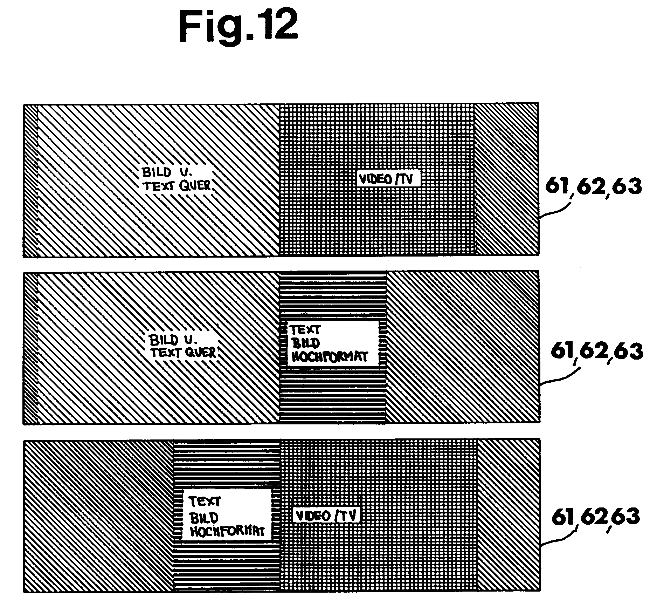

This also applies to the display of two video images (second illustration from the top in Fig. 11) or the display of two horizontal text pages or images (top of Fig. 11). In either case a change in the format does not result in different image heights but only in changes in the image width which are not disturbing however. If different image formats are projected side by side there are - as inferrable from Fig. 12 - once again no differences in the image height but only differences in the width. Fig. 12 shows at the top a combination of a horizontal image or text presentation with a normal TV image. The middle example in Fig. 12 shows a horizontal presentation of an image or text in connection with an upright presentation of image or text, and the bottom illustration shows a combination of an upright presentation of an image or text with a normal TV image.

Needless to say that when the control signals are produced by data processing unit 65 reproduction scales are chosen such that the heights of the image-forming surfaces of the LC displays are always completely covered. The enlargement scale therefore differs depending on whether a page is for example projected in the upright or horizontal direction, see Fig. 11, third and first illustration respectively.

Fig. 1 shows the projector in its normal projection mode in which the deflecting mirror 25 is pivoted away from lens 3. If the overhead projection means is to be used mirror support arm 33 is pivoted away from the upper surface of the projector into its vertical position in which it is shown in Fig. 2. Mirror frame 31 with the upper deflecting mirror 29 which is positioned below hood 43 is thus cleared so that it can be plugged onto the holding projections 41 at the upper end of mirror support arm 33, see Figs. 2, 3 and 5. The lower deflecting mirror 25 is moved into its 45_ position in which it is illustrated in Figs. 2 and 5. Subsequently the upper deflecting mirror 29 is adjusted to the desired angular position about hinge 37.

When the mirrors are in the positions shown overhead projection takes place in the rear direction relative to the light passage direction of lens 3. Under such circumstances the projected image would be upside down and reversed as compared to the image projected directly through lens 3 in the normal direction. To account for this the data processing unit 65 can be programmed such that the LC displays 61 to 63 are controlled with a correspondingly reversed orientation. The program can be automatically altered in that a switch is actuated when mirror support arm 33 is moved to its upper position.

For producing the first and the second image the LC displays can consist of an integral LC element in which one partial area each is allotted to one image. However individual LC elements which are arranged side by side can also be provided for the first and the second image.

Instead of using two adjacently arranged lamps for uniformly illuminating the wide-format LC displays, other light sources such as a horizontal tube can also be employed.

The above description and drawing are confined to features which are essential to explain an example of the invention. Inasmuch as the features are disclosed in the description and in the drawing and not mentioned in the claims they also serve if necessary to define the subject matter of the invention.

## Claims

1. Projector with a light source and an optical means which includes a lens and defines a raypath extending from said light source to said lens and with a projection gate for an image which is positioned in the raypath and through which light from said light source can be transmitted, **characterized** in that the projection gate (61, 62, 63) is provided for an additional second image which along with the first image can be projected through the lens (3).

2. Projector according to claim 1, characterized in that the projection gate comprises at least one LC display (61, 62, 63).

3. Projector according to claim 2, characterized in that one LC display (61, 62, 63) each is provided for producing the first image and the second image.

4. Projector according to claim 2 or 3, characterized in that it is designed as a color video projector and comprises a mirror system (75) forming part of its optical means and serving to separate the colors of the light from light source (69) and in that a plurality of LC displays (61, 62, 63) is provided which are optically associated with the mirror system (75) to produce separation images including color information of the first and the second image .

5. Projector according to one of claims 2 to 4, characterized in that it includes a programmable electronic data processing unit (65) for generating electric control signals for the LC displays (61, 62, 63) and in that the data processing unit (65) consists of several parts for selectively and separately processing image information from the first and the second image.

6. Projector according to claim 5, characterized in that the data processing unit (65) comprises a plurality of signal processing channels for color video signals of the first and the second image.

7. Projector according to claim 5 or 6, characterized in that the data processing unit (65) includes at least one signal processing channel for audio signals.

8. Projector according to claim 6 or 7, characterized in that it comprises at least one disk drive (21) associated with the data processing unit (65) for transmitting color video and audio signals respectively to the signal processing channels.

9. Projector according to one of claims 5 to 8, characterized in that connecting means (45) are provided for selectively inputting into the data processing unit (65) externally generated color video and/or audio signals.

10. Projector according to one of claims 5 to 9, characterized in that for the projection of different image formats, the electric control signals for the LC displays (61, 62, 63) can be generated by the data processing unit (65) in signal forms corresponding to different reproduction scales, and in that the ratio of width to height of the image-forming surfaces of the LC displays (61, 62, 63) corresponds to the ratio of width to height of that image format to be projected whose ratio has the greatest value.

11. Projector according to claim 10, characterized in that the ratio of width to height corresponds to that of the HDTV format such that two HDTV images can be generated as a first and a second image which each fill the areas of the associated LC displays (61, 62, 63).

12. Projector according to the preamble of claim 1 or one of claims 2 to 11, characterized in that the light source comprises a plurality of lamps (69, 70) which are arranged on a lamp exchange turret (71) such that they can be selectively moved into and out of the raypath.

13. Projector according to claim 12, characterized in that the lamp exchange turret (71) supports two pairs of lamps (69, 70) both of which are arranged side by side and of which one pair serves to project the first and the second image when it is in its position in the raypath while the other pair is positioned outside the raypath and serves as spare lamps.

14. Projector according to the preamble of claim 1 or one of claims 2 to 13, characterized in that it has a mirror arrangement which can be optically associated with lens (3) for overhead projection and which is movable between an inoperative rest position in which lens (3) is cleared for normal projection, and an operative position in which a first deflecting mirror (25) deflects the light from lens (3) vertically upwards, and in that the mirror arrangement includes at least one further mirror (29) placed downstream in the light path and serving to deflect the light horizontally.

15. Projector according to claim 14, characterized in that the mirror arrangement includes a mirror support arm (33) which is pivotably mounted in the projector housing adjacent to lens (3) and in whose end section adjacent to lens (3) the first deflecting mirror (25) is mounted such that it is movable to a position in front of the lens or into our out of the raypath of lens (3).

16. Projector according to one of claims 5 to 15, characterized in that it has a cradle (11) in which a remote control (13) can be releasably secured whose keys (23) serve to program and/or control the data processing unit (65) and in that a coupling means (19) provided in the cradle (11) serves for the transfer of data between the remote control (13) received in the cradle (11) and the data processing unit (65).

17. Projector according to claim 16, characterized in that the cradle (11) serves as a charging station for the remote control (13) and is provided with connecting means (15) for the power supply of the chargeable current sources of remote control (13).

18. Projector according to one of claims 2 to 17, characterized in that it has an external LC display (84) serving as a control monitor for images projected or to be projected.

19. Projector according to claim 18, characterized in that the control monitor can be detached from the projector and is provided with a coupling means for the exchange of data with the remote control (13) and/or the data processing unit (65) of the projector.

20. Projector according to claim 19, characterized in that the control monitor comprises a receiving means (87) into which the remote control (13) can be inserted and which includes the coupling means for the exchange of data with the remote control (13).
